# EUROPÄISCHE PATENTANMELDUNG

(11) **EP 4 617 116 A1**
(43) Veröffentlichungstag der Anmeldung: **17.09.2025**
(21) Anmeldenummer: 24217067.8
(22) Anmeldetag: 03.12.2024
(51) Int. Cl.: B60N 2/34, B60N 2/809, B60N 2/856

(54) **FAHRZEUGSITZ**

(30) Priorität: 13.03.2024 DE 102024107084
(71) Anmelder: Hermann Schnierle GmbH, 86368 Gersthofen (DE)
(72) Erfinder: Schnierle, Martin, 86153 Augsburg (DE)
(74) Vertreter: Charrier Rapp & Liebau

(57) **Zusammenfassung**

Die Offenbarung betrifft einen Fahrzeugsitz, der ein Sitzteil (2) mit einem Sitzpolster (15), eine an dem Sitzteil (2) schwenkbar angeordnete Rückenlehne (3) mit einem Rückenpolster (16) und eine an der Rückenlehne (3) verstellbar angeordnete Kopfstütze (5) mit einer Tragkonstruktion (21) enthält. Die Tragkonstruktion (21) der Kopfstütze (5) ist zum Ausziehen in eine gegenüber der üblichen Sitzposition weiter ausgezogene Liegeposition und zur Auflage eines die Auflagefläche des Rückenpolsters (16) in einer zurückgeklappten Liegestellung nach hinten verlängernden Zusatzpolsters (6) ausgebildet.

## Beschreibung

Die Erfindung betrifft einen Fahrzeugsitz nach dem Oberbegriff des Anspruchs 1.

Fahrzeugsitze weisen üblicherweise ein mit einem Sitzpolster versehenes Sitzteil, eine an dem Sitzteil schwenkbar angeordnete Rückenlehne mit einem Rückenpolster und eine an der Rückenlehne angeordnete Kopfstütze auf. Es gibt auch bereits Fahrzeugsitze, die eine an der Vorderseite des Sitzteils klappbar angeordnete Fußstütze für eine zusätzliche Auflage der vorderen Beinteile aufweisen. Durch eine derartige zusätzliche Fußstütze können die vorderen Beinteile beim Zurückklappen der Rückenlehne abgestützt werden. Bei den bekannten Fahrzeugsitzen dieser Art kann jedoch die Rückenlehne üblicherweise nicht vollständig in eine horizontale Liegeposition gebracht werden und auch die Liegefläche derartiger Fahrzeugsitze ist beschränkt.

Aufgabe der Erfindung ist es, einen Fahrzeugsitz der eingangs genannten Art zu schaffen, der in eine vollständige horizontale Liegeposition gebracht werden kann und eine erweiterte Liegefläche ermöglicht.

Diese Aufgabe wird durch einen Fahrzeugsitz mit den Merkmalen des Anspruchs 1 gelöst. Vorteilhafte Ausgestaltungen der Erfindung sind in den Unteransprüchen angegeben.

Der erfindungsgemäße Fahrzeugsitz zeichnet sich dadurch aus, dass die Tragkonstruktion der Kopfstütze zum Ausziehen in eine gegenüber der üblichen Sitzposition weiter ausgezogene Liegeposition und zur Auflage eines die Auflagefläche des Rückenpolsters in einer zurückgeklappten Liegestellung nach hinten verlängernden Zusatzpolsters ausgebildet ist. Durch den gegenüber herkömmlichen Kopfstützen erheblich vergrößerten Auszug der Kopfstütze und der Möglichkeit der Auflage eines Zusatzpolsters auf der Tragkonstruktion der ausgezogenen Kopfstütze in der horizontalen Lage der Rückenlehne kann der Fahrzeugsitz mit einfachen Mitteln zu einem Liegesitz mit vergrößerter Liegefläche umfunktioniert werden. Die Tragkonstruktion der Kopfstütze dient nicht nur Halterung der Kopfstütze in der Sitzposition, sondern dient auch als Abstützung für das Zusatzpolster in einer Liegestellung des Fahrzeugsitzes.

In einer besonders bevorzugten Ausführungsform enthält die Tragkonstruktion der Kopfstütze zwei zueinander parallele und in zwei randseitigen Tragprofilen an der Rückseite der Rückenlehne verschiebbar geführte Tragstützen. Bei Ausziehen der Kopfstütze wird somit durch die beiden Tragstützen eine relativ große Auflage für ein Zusatzpolster zur Vergrößerung der Liegefläche geschaffen.

In der Liegeposition sind die Tragstützen vorzugsweise vollständig in den Tragprofilen eingeführt. Durch die Kopfstütze wird somit das Sitzgrundgestell versteift. Dadurch ist es möglich, am Grundgestell des Sitzes Material einzusparen.

Die an der Rückseite der Rückenlehne angeordneten Tragprofile können in einer konstruktiv einfachen und dennoch stabilen Ausführung als Hohlprofile und die Tragstützen der Tragkonstruktion als in den Hohlprofilen verschiebbar geführte Tragstangen ausgebildet sein. Die Führung der Tragkonstruktion der Kopfstütze an der Rückenlehne kann aber auch auf andere Weise erfolgen.

Zweckmäßigerweise entspricht die Länge der beiden Tragprofile und die Länge der beiden in den Tragprofilen verschiebbar angeordneten Tragstützen im Wesentlichen der Länge des Rückenpolsters, sodass die Kopfstütze relativ weit ausgezogen werden kann und die Tragkonstruktion der Kopfstütze somit eine große Auflagefläche für das Zusatzpolster bietet. Der Abstand zwischen den beiden zueinander parallelen Tragstützen entspricht im Wesentlichen der Breite des Sitzpolsters, sodass ein Zusatzpolster mit derselben Breite wie das Sitzpolster gut abgestützt werden kann. Zur besonders stabilen Halterung des Zusatzpolsters kann dieses einen Lattenrost oder eine Halterung zur Befestigung auf den Tragstützen der Tragkonstruktion aufweisen.

Gemäß einer weiteren zweckmäßigen Ausgestaltung kann die Kopfstütze an der Tragkonstruktion zwischen einer Sitzstellung und einer nach hinten gekippten Liegestellung um 90° schwenkbar angeordnet sein. An der Kopfstütze kann ein manuell lösbarer Arretiermechanismus angeordnet sein, durch den die Kopfstütze in der Sitzstellung und der nach hinten gekippten Liegestellung arretiert werden kann.

Das Zusatzpolster kann zweckmäßigerweise über einen Klettverschluss, einen Haltegurt oder dgl. lösbar an der Rückseite der Rückenlehne befestigbar sein. Dadurch ist das Zusatzpolster gut verstaut und kann beim Umbau zum Liegesitz einfach abgenommen und auf die Tragkonstruktion aufgelegt werden.

Eine weitere Vergrößerung der Liegefläche kann dadurch erreicht werden, dass an der Vorderseite des Sitzteils eine Fußstütze zwischen einer Einklappstellung und einer hochgeklappten Liegestellung schwenkbar angeordnet ist.

Weitere Besonderheiten und Vorzüge der Erfindung ergeben sich aus der folgenden Beschreibung eines bevorzugten Ausführungsbeispiels anhand der Zeichnungen. Es zeigen:
- **Figur 1**: einen in einer Sitzstellung befindlichen Fahrzeugsitz in einer Perspektivansicht;
- **Figur 2**: den in einer Sitzstellung befindlichen Fahrzeugsitz von Figur 1 in einer **S**eitenansicht;
- **Figur 3**: eine Perspektivansicht des in Figur 1 gezeigten Fahrzeugsitzes mit heruntergeklapptem Rückenteil und hochgeklappter Fußablage;
- **Figur 4**: eine Seitenansicht des Fahrzeugsitzes in der Stellung von Figur 3;
- **Figur 5**: eine Perspektivansicht des in Figur 1 gezeigten Fahrzeugsitzes mit heruntergeklapptem Rückenteil, hochgeklappter Fußablage und ausgezogener Kopfstütze;
- **Figur 6**: eine Seitenansicht des Fahrzeugsitzes in der Stellung von Figur 5;
- **Figur 7**: eine Perspektivansicht des in Figur 1 gezeigten Fahrzeugsitzes mit heruntergeklappten Rückenteil, hochgeklappter Fußablage, ausgezogener Kopfstütze und aufgesetztem Zusatzpolster und
- **Figur 8**: eine Seitenansicht des Fahrzeugsitzes in der Stellung von Figur 7.

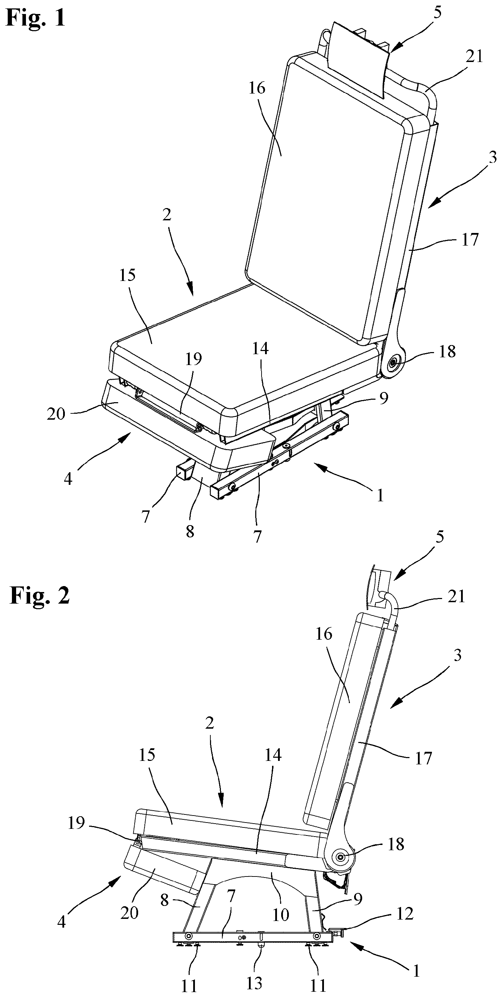

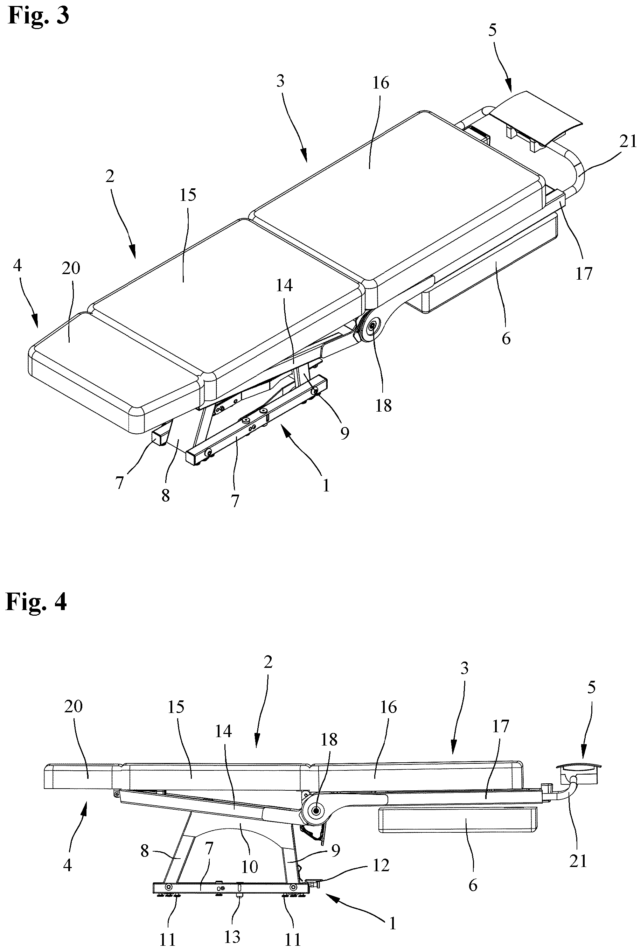

Der in den Figuren 1 und 2 in einer Sitzstellung dargestellte Fahrzeugsitz eines Kraftfahrzeugs weist ein auf einem Untergestell 1 angeordnetes Sitzteil 2, eine an der Rückseite des Sitzteils 2 schwenkbar angeordnete Rückenlehne 3 und eine an der Vorderseite des Sitzteils 2 klappbar angeordnete Fußstütze 4 auf. An der Rückenlehne 3 ist eine in der Höhe verstellbare Kopfstütze 5 angebracht. Außerdem kann an der Rückseite der Rückenlehne 3 ein in den Figuren 3 bis 5 gezeigtes Zusatzpolster 6 lösbar gehalten sein.

Das Untergestell 1 enthält in der gezeigten Ausführung zwei zueinander parallele schienenförmige Fußteile 7, zwei von den Fußteilen 7 schräg nach oben verlaufende vordere und hintere Stützen 8 bzw. 9 und ein oberes Verbindungsstück 10 zwischen den Stützen 8 und 9, auf dem das Sitzteil 2 angeordnet ist. Wie aus Figur 2 ersichtlich ist, sind an den Fußteilen 7 mehrere nach unten ragende Führungsbolzen 11 zum Eingriff in Führungsnuten einer Bodenschiene angeordnet. An den Fußteilen 7 sind außerdem durch einen Hebel 12 betätigbare Arretierbolzen 13 zur sicheren Halterung des Untergestells 1 in einer gewünschten Stellung vorgesehen.

Das auf dem Untergestell 1 angeordnete Sitzteil 2 umfasst ein Traggestell 14 und ein auf dem Traggestell 14 angeordnetes Sitzpolster 15. Die Rückenlehne 3 enthält ein Rückenpolster 16 und ein an der Rückseite des Rückenpolsters 16 angeordnetes Rückengestell mit zwei über der gesamten Höhe des Rückenpolsters 16 an dessen Längsseiten randseitig verlaufenden Tragprofilen 17. Die Tragprofile 17 sind bei der gezeigten Ausführung als Hohlprofile mit einem quadratischen Querschnitt ausgeführt. Die Rückenlehne 3 ist über ein Gelenk 18 schwenkbar an dem Traggestell 14 des Sitzteils 2 angelenkt und kann zwischen einer in den Figuren 1 und 2 gezeigten Sitzstellung und einer in den Figuren 3 und 4 gezeigten, nach hinten geklappten horizontalen Liegestellung geschwenkt werden. Die Fußstütze 4 enthält ein über eine Scharnieranordnung 19 an dem Traggestell 14 schwenkbar angeordnetes Fußpolster 20, das zwischen einer in den Figuren 1 und 2 gezeigten Einklappstellung und einer in den Figuren 3 und 4 gezeigten hochgeklappten Liegestellung geschwenkt werden kann. Die Kopfstütze 5 ist über eine aus einer Rundstange oder einem Rohr gebogene bügelförmige Tragkonstruktion 21 verstellbar an der Rückenlehne 3 angebracht.

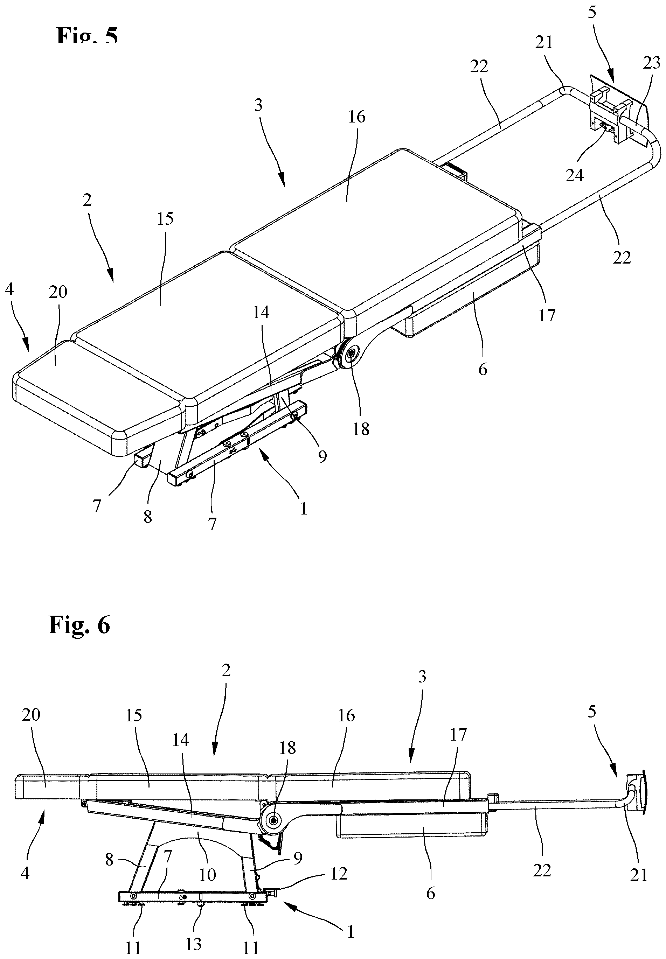

Wie besonders aus den Figuren 5 und 6 ersichtlich ist, enthält die aus einer Rundstange oder einem Rohr gebogene bügelförmige Tragkonstruktion 21 der Kopfstütze 5 zwei in den beiden randseitigen Tragprofilen 17 der Rückenlehne 3 verschiebbar geführte parallele Tragstützen 22 und eine dazu rechtwinklige Verbindungstütze 23. Durch die Tragkonstruktion 21 mit den beiden in den Tragprofilen 17 der Rückenlehne 3 verschiebbar geführten parallelen Tragstützen 22 kann die Tragkonstruktion 21 zusammen mit der Kopfstütze 5 zwischen einer in den Figuren 3 und 4 gezeigten Einfahrposition und einer in den Figuren 5 und 6 gezeigten ausgezogenen Liegeposition verschoben werden. An den Tragprofilen 17 der Rückenlehne 3 ist eine nicht gezeigte Verriegelungseinrichtung vorgesehen, durch welche die Tragkonstruktion 21 in der Einfahrposition oder der ausgezogenen Liegeposition arretiert werden kann.

An der zu den beiden stangenförmigen Tragstützen 22 rechtwinkligen Verbindungstütze 23 ist die Kopfstütze 5 zwischen einer in Figur 3 gezeigten Sitzstellung und einer in Figur 5 gezeigten, gegenüber der Sitzstellung um 90° nach hinten gekippten Liegestellung schwenkbar angeordnet. Die Länge der beiden Tragprofile 17 und die Länge der beiden in den Tragprofilen 17 verschiebbar angeordneten Tragstützen 22 entspricht im Wesentlichen der Länge bzw. Höhe des Rückenpolsters 16, sodass die Tragkonstruktion 21 zusammen mit der Kopfstütze 5 relativ weit ausgezogen werden kann und die Tragkonstruktion 21 der Kopfstütze 5 eine große Auflagefläche für das Zusatzpolster 6 bietet. Der Abstand zwischen den beiden zueinander parallelen Tragstützen 22 entspricht im Wesentlichen der Breite des Sitzpolsters 16, sodass die beiden Tragstützen 22 eine gute Auflage für ein Zusatzpolster 6 ermöglichen, das dieselbe Breite wie das Sitzpolster 16 aufweist.

An der Kopfstütze 5 befindet sich eine in Figur 5 gezeigter, von Hand betätigbarer Arretiermechanismus 24, durch den die Kopfstütze 5 in der Sitzstellung oder der nach hinten gekippten Liegestellung verriegelt werden kann. Durch manuelle Betätigung des Arretiermechanismus 24 kann die Arretierung der Kopfstütze 5 zum Verschwenken der Kopfstütze 5 zwischen der in Figur 3 gezeigten Sitzstellung und einer in Figur 5 gezeigten Liegestellung gelöst werden.

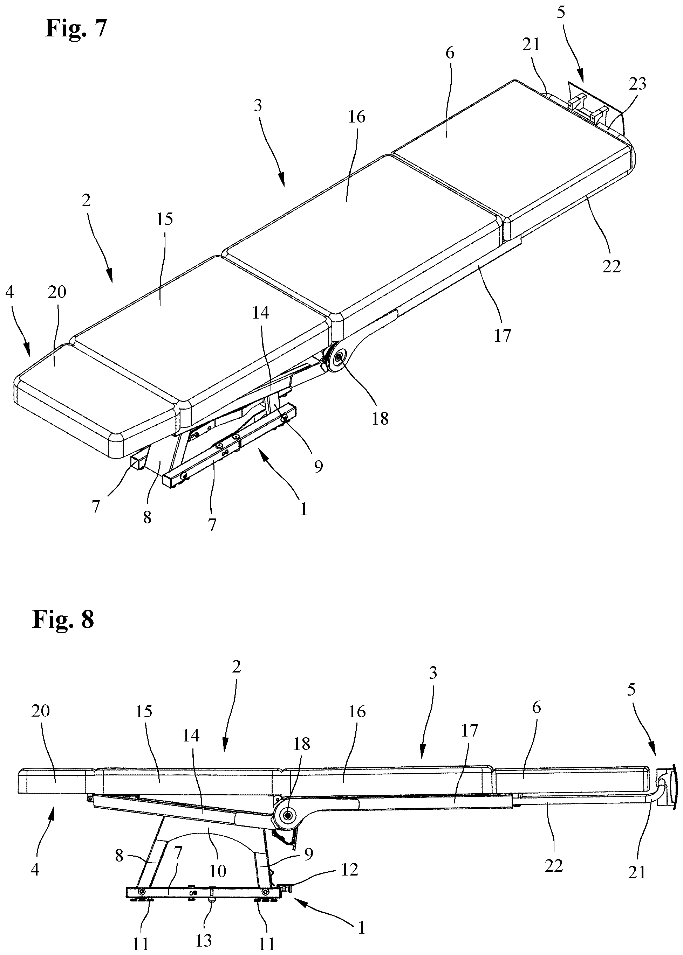

Wie aus den Figuren 1 bis 8 hervorgeht, kann der vorstehend beschriebene Fahrzeugsitz einfach und schnell aus einer in den Figuren 1 und 2 gezeigten Sitzstellung in eine in den Figuren 7 und 8 gezeigte Liegestellung gebracht werden. Hierzu kann zunächst die Rückenlehne 3 nach hinten in eine horizontale Liegestellung geklappt und die an der Vorderseite des Sitzteils 2 angeordnete Fußstütze 4 nach oben in eine horizontale Position gebracht werden, wie dies in den Figuren 3 und 4 gezeigt ist. Anschließend kann die Tragkonstruktion 21 zusammen mit der Kopfstütze 5 weit über die in Figur 1 gezeigte normale Einfahrstellung in der üblichen Sitzstellung hinaus nach hinten ausgezogen und die Kopfstütze 5 um 90° nach hinten geschwenkt werden, wie dies aus den Figuren 5 und 6 hervorgeht. Dann kann das an der Rückseite der Rückenlehne 3 angeordnete Zusatzpolster 6 abgenommen und auf die ausgezogene Tragkonstruktion 21 der Kopfstütze 5 aufgelegt werden, wie dies in den Figuren 7 und 8 gezeigt ist. Das Zusatzpolster 6 weist dieselbe Höhe wie das Rückenpolster 16, das Sitzpolster 15 und die Fußstütze 4 auf, sodass sich in der Liegestellung eine durchgehende Liegefläche ergibt.

### Bezugszeichenliste

- 1: Untergestell
- 2: Sitzteil
- 3: Rückenlehne
- 4: Fußstütze
- 5: Kopfstütze
- 6: Zusatzpolster
- 7: Fußteil
- 8: Vordere Stütze
- 9: Hintere Stütze
- 10: Verbindungsstück
- 11: Führungsbolzen
- 12: Hebel
- 13: Arretierbolzen
- 14: Traggestell
- 15: Sitzpolster
- 16: Rückenpolster
- 17: Hohlprofil
- 18: Gelenk
- 19: Scharnieranordnung
- 20: Fußpolster
- 21: Tragkonstruktion
- 22: Tragstütze
- 23: Verbindungsstütze
- 24: Arretiereinrichtung

## Patentansprüche

1. Fahrzeugsitz, der ein Sitzteil (2) mit einem Sitzpolster (15), eine an dem Sitzteil (2) schwenkbar angeordnete Rückenlehne (3) mit einem Rückenpolster (16) und eine an der Rückenlehne (3) verstellbar angeordnete Kopfstütze (5) mit einer Tragkonstruktion (21) enthält, **dadurch gekennzeichnet, dass** die Tragkonstruktion (21) der Kopfstütze (5) zum Ausziehen in eine gegenüber der üblichen Sitzposition weiter ausgezogene Liegeposition und zur Auflage eines die Auflagefläche des Rückenpolsters (16) in einer zurückgeklappten Liegestellung nach hinten verlängernden Zusatzpolsters (6) ausgebildet ist.

2. Fahrzeugsitz nach Anspruch 1, **dadurch gekennzeichnet, dass** die Tragkonstruktion (21) der Kopfstütze (5) zwei zueinander parallele und in zwei randseitigen Tragprofilen (17) an der Rückseite der Rückenlehne (3) verschiebbar geführte Tragstützen (22) enthält.

3. Fahrzeugsitz nach Anspruch 2, **dadurch gekennzeichnet, dass** die Tragstützen (22) in der Sitzposition vollständig in den Tragprofilen (17) eingeführt sind.

4. Fahrzeugsitz nach Anspruch 2 oder 3, **dadurch gekennzeichnet, dass** die an der Rückseite der Rückenlehne (3) angeordneten Tragprofile (17) als Hohlprofile und die Tragstützen (22) als in den Hohlprofilen verschiebbar geführte Tragstangen ausgebildet sind.

5. Fahrzeugsitz nach einem der Ansprüche 2 bis 4, **dadurch gekennzeichnet, dass** die Länge der Tragprofile (17) und die Länge der Tragstützen (22) im Wesentlichen der Länge des Rückenpolsters (16) entspricht.

6. Fahrzeugsitz nach einem der Ansprüche 2 bis 5, **dadurch gekennzeichnet, dass** der Abstand zwischen den beiden Tragstützen (22) im Wesentlichen der Breite des Rückenpolsters (16) entspricht.

7. Fahrzeugsitz nach einem der Ansprüche 1 bis 6, **dadurch gekennzeichnet, dass** die Kopfstütze (5) an der Tragkonstruktion (21) zwischen einer Sitzstellung und einer nach hinten gekippten Liegestellung um 90° schwenkbar angeordnet ist.

8. Fahrzeugsitz nach Anspruch 7, **dadurch gekennzeichnet, dass** an der Kopfstütze (5) ein manuell lösbarer Arretiermechanismus (24) zur Arretierung der Kopfstütze in der Sitzstellung und der nach hinten gekippten Liegestellung angeordnet ist.

9. Fahrzeugsitz nach einem der vorherigen Ansprüche, **dadurch gekennzeichnet, dass** das Zusatzpolster (6) an der Rückseite der Rückenlehne (3) lösbar befestigbar ist.

10. Fahrzeugsitz nach einem der vorherigen Ansprüche, **dadurch gekennzeichnet, dass** an der Vorderseite des Sitzteils (2) eine Fußablage (4) zwischen einer Einklappstellung und einer hochgeklappten Liegestellung schwenkbar angeordnet ist.

11. Fahrzeugsitz nach einem der vorherigen Ansprüche, **dadurch gekennzeichnet, dass** das Sitzteil (2) auf einem Untergestell (1) angeordnet ist.

12. Fahrzeugsitz nach einem der vorherigen Ansprüche, **dadurch gekennzeichnet, dass** das Untergestell (1) zwei zueinander parallele schienenförmige Fußteile (7), zwei von den Fußteilen (7) schräg nach oben verlaufende vordere und hintere Stützen (8, 9) und ein oberes Verbindungsstück (10) zwischen den Stützen (8, 9) enthält.

13. Fahrzeugsitz nach Anspruch 12, **dadurch gekennzeichnet, dass** an der Unterseite der schienenförmigen Fußteile (7) nach unten ragende Führungsbolzen (11) zum Eingriff in Führungsnuten einer Bodenschiene und mindestens ein Arretierbolzen (13) zur sicheren Halterung des Untergestells (1) in einer gewünschten Stellung angeordnet sind.
